# EUROPÄISCHE PATENTSCHRIFT

(11) **EP 1 387 109 B1**
(45) Veröffentlichungstag und Bekanntmachung des Hinweises auf die Patenterteilung: **05.10.2005**
(21) Anmeldenummer: 02017102.1
(22) Anmeldetag: 30.07.2002
(51) Int. Cl.: F16F 9/06

(54) **Gasfeder**
Gas spring
Ressort à gaz

(43) Veröffentlichungstag der Anmeldung: 04.02.2004
(73) Patentinhaber: Stabilus GmbH, D-56070 Koblenz (DE)
(72) Erfinder: Popjoy, Mark A., Landsdale, Pennsylvania 19446 (US)
(74) Vertreter: Klein, Thomas

(56) Entgegenhaltungen:
- DE-A- 19 714 882
- US-A- 5 802 638
- US-A- 6 152 432
- "TEMPERATURE-COMPENSATING GAS SPRING MAKES HATCH CLOSING EASY" MACHINE DESIGN, PENTON,INC. CLEVELAND, US, Bd. 63, Nr. 23, 21. November 1991 (1991-11-21), Seite 32 XP000256724 ISSN: 0024-9114

## Beschreibung

Die vorliegende Erfindung betrifft eine Gasfeder zur Bewegung einer Last bezüglich eines Körpers, die Folgendes umfaßt:
ein Zylinderglied mit einer Achse, einer eine Kammer bildenden Innenfläche, einem ersten Ende des Zylindergliedes und einem zweiten geschlossenen Ende;
eine im ersten Ende des Zylinderglieds aufgenommene Kolbenstangendichtung/-führung;
eine in der Dichtung/Führung zur Bewegung in das und aus dem Zylinderglied aufgenommene Kolbenstange mit einer am Ende der Kolbenstange befestigten Kolbenanordnung;
einen schwimmenden Kolben, um einen Gasabschnitt und einen geschlossenen Endabschnitt zu definieren;
eine im Gasabschnitt enthaltene Gasmasse, die unter einem über Atmosphärendruck liegenden Druck steht;
eine Erfassungsvorrichtung zum Erfassen der durch das Gas im Gasabschnitt an die Kolbenstange angelegten Kraft und zum Erzeugen eines entsprechenden Signals;
ein Mittel zur Bewegung des schwimmenden Kolbens in Axialrichtung des Zylinderglieds, um den Druck des Gases im Gasabschnitt zu ändern, wobei das Bewegungsmittel von einer Steuerung in Abhängigkeit von dem Signal gesteuert wird.

Derartige Gasfedern werden in erster Linie zum Anheben und Offenhalten von Kofferraumhauben, Heckklappen, Rückwandklappen und Motorraumdeckeln von Kraftfahrzeugen verwendet werden.

### ALLGEMEINER STAND DER TECHNIK

Gasfedern werden weithin dazu verwendet, das Gewicht von Motorraumdeckeln, Kofferraumhauben, Heckfenstern und Heckklappen von Personenkraftwagen, Kombiwagen und Lieferwagen teilweise oder vollständig auszugleichen, um ihr Öffnen zu erleichtern und sie in einer fast oder vollständig geöffneten Stellung offenzuhalten. Es ist wohlbekannt, daß die Kraftabgaben von Gasfedern mit der Temperatur des Gases beträchtlich schwanken - bei niedrigen Temperaturen erzeugt die Gasfeder eine Kraft, die sehr viel geringer sein kann als die bei hohen Temperaturen erzeugte Kraft. Deshalb muß eine Gasfeder so ausgeführt werden, daß sie eine ausreichende Kraft zum Offenhalten der Haube, Heckklappe oder dergleichen (im Folgenden als die "Last" bezeichnet) bei einer geeignet gewählten niedrigen Temperatur, zum Beispiel -30°F, erzeugt. Gewöhnlich sind Gasfedern so ausgeführt, daß sie in der Offenhaltestellung der Last bei der niedrigen Temperatur eine Kraft von ca. einem bis fünf Pfund über der Last erzeugen. Bei hohen Temperaturen kann sich die Offenhaltekraft um bis zu 50 Pfund erhöhen, was bedeutet, daß die zum Bewegen der Last aus der Offenhaltestellung in die geschlossene Stellung erforderliche Kraft (die "Handhabungslast") mehr als 50 Pfund betragen kann.

Neben dem Problem großer Schwankungen bei der Handhabungslast in Abhängigkeit von der Temperatur schwankt die in allen Stellungen der Last zwischen der geschlossenen und der geöffneten Stellung durch die Gasfeder auf die Last ausgeübte Gewichtsausgleichskraft stark mit der Temperatur. Bei kaltem Wetter übt die Gasfederkraft eine wesentlich geringere Ausgleichskraft auf die Last aus als bei hohen Temperaturen. In Abhängigkeit von der Geometrie des Gasfeder-/Lastsystems muß der Benutzer bei kaltem Wetter während eines Teils oder der ganzen Bewegung der Last aus der geschlossenen in die vollständig geöffnete Stellung möglicherweise eine relativ große Kraft auf die Last ausüben. Bei heißem Wetter könnte die Gasfederkraft die Last ohne Eingriff des Benutzers mit einer relativ großen Öffnungskraft und einer relativ hohen Geschwindigkeit aus der geschlossenen in die geöffnete Stellung bewegen, was für einen unachtsamen Benutzer manchmal beunruhigend sein kann oder die Last beschädigen könnte, wenn ein Hindernis im Weg ist, das ein vollständiges Öffnen der Last verhindert.

Es sind verschiedene Vorschläge zur Linderung des Problems der Schwankungen aufgrund von Temperaturänderungen bei der Offenhalte-/Handhabungs-last bei geöffneter Last unterbreitet worden. Einige Beispiele sind in den US-Patenten Nr. 5,106,065 (Staton et al., 1992) und 5,404,972 (Popjoy et al., 1995) zu finden. Diese Lösungen basieren darauf, daß eine oder mehrere Bypassleitungen zwischen den Nebenkammern der Gaskammer auf gegenüberliegenden Seiten des Kolbens vorgesehen sind, wobei jede Bypassleitung ein federbelastetes Ventil besitzt, das bei niedrigen Temperaturen geschlossen ist und den Gasstrom aus der Nebenkammer am geschlossenem Ende zur Nebenkammer am Ende des Zylindergliedes sperrt und bei hohen Temperaturen Gasstrom durch die Bypassleitung gestattet. Wenn die Bypassleitung geschlossen ist, wird die relativ geringe Kraft der Gasfeder durch die Wirkung der Vorspannkraft auf das Ventil ergänzt, so daß die Offenhaltekraft erhöht wird. Die Vorrichtungen dieser beiden Patente wirken sich nicht auf die Kraftabgabe der Gasfeder aus, wenn die Last aus der geschlossenen in die geöffnete Stellung bewegt wird.

Des Weiteren ist vorgeschlagen worden, daß eine Verringerung der Ausgangskraft einer Gasfeder aufgrund eines Gaslecks oder niedriger Temperatur dadurch kompensiert werden kann, daß man eine Sekundärgaskammer oder einen Sekundärgasspeicher, die bzw. der Gas auf einem höheren Druck als der in der Primärkammer enthält, sowie ein auf Druck ansprechendes Ventil in einem Durchgang bereitstellt, das die Sekundärkammer mit der Primärkammer verbindet und sich öffnet, wenn der Druck in der Primärkammer unter einen vorbestimmten Wert fällt. Eine solche Anordnung wird im US-Patent Nr. 5,042,782 (Mintgen, 1991) vorgeschlagen. Wenn Gas aus der Sekundärkammer in die Hauptkammer geleitet wird, um einen durch eine Temperaturverringerung hervorgerufenen Druckabfall in der Hauptkammer auszugleichen, wird eine Verringerung der Ausgangskraft verhindert, indem Luft aus der Sekundärkammer in die Hauptkammer nachgefüllt wird. Wenn sich die Kraftabgabe der Gasfeder durch einen Temperaturanstieg erhöht, kann, falls gewünscht, Gas aus der Hauptkammer durch eine Lüftung (Figur 4) abgelassen werden, wodurch ein Anstieg der Gasfederkraft auf eine unerwünschte Höhe verhindert wird. Die Anordnung gemäß dem Patent von Mintgen hält eine relativ gleichmäßige Kraftabgabe der Gasfeder über einen großen Temperaturbereich aufrecht, erfordert aber ihrer Beschaffenheit nach das Ablassen von Gas aus dem System, damit nicht vollständige Heiß-Kalt-Heiß-Betriebszyklen bewirken, daß die Betriebskraft bei der nächsten Kalt-Heiß-Phase eines anderen Zyklus zu groß wird. Wenn nicht in den jeweiligen Ventilen zum Wiederauffüllen und Ablassen von Gas eine große Differenz eingebaut ist, dann wird häufiges Ablassen von Gas das Gas in der Sekundärkammer bald erschöpfen, wodurch ein Nachfüllen erforderlich ist. Die Notwendigkeit einer häufigen Wartung des Systems ist ein Nachteil.
Aus dem nächstliegenden Stand der Technik, der US 6 152 432 A1 ist eine Gasfeder der eingangs genannten Art bekannt, bei der die Kolbenstange als Zylinder ausgebildet ist, deren Innenraum durch den schwimmenden Kolben in eine Flüssigkeitskammer und einen Gasabschnitt unterteilt ist. Der Gasabschnitt ist über eine Bohrung mit dem Gasabschnitt des Zylinderglieds verbunden, während die Flüssigkeitskammer über einen Anschluß an dem aus dem Zylinderglied herausragenden Ende der Kolbenstange mit einer Pumpe verbindbar ist. Aus der DE 197 14 882 A1 ist eine Gasfeder bekannt, die einen Zylinder und eine in dem Zylinder verschiebbar angeordnete Kolbenstange mit einem den Zylinderinnenraum unterteilenden Kolben aufweist. Die Kolbenstange ist in Ausschubrichtung oder in Einschubrichtung mittels eines in dem Zylinder gefangenen inkompressiblen Strömungsmediums blockierbar, wobei an das inkompressible Strömungsmedium ein kompressibles Strömungsmedium angrenzt. Das kompressible Strömungsmedium ist dabei druckbelastbar oder druckentlastbar.

### KURZDARSTELLUNG DER ERFINDUNG

Eine Aufgabe der vorliegenden Erfindung besteht in der Bereitstellung einer Gasfeder, die über eine lange Nutzlebensdauer eine steuerbare Kraftabgabe bereitstellt, ohne dass irgendeine Wartung erforderlich ist, wie zum Beispiel Nachfüllen eines Gases in einen zusätzlichen Versorgungsspeicher. Eine andere Aufgabe besteht in der Bereitstellung einer Gasfeder, die Kräfte ausüben kann, welche auf vorbestimmte Weise während jedes Hubs eines Betriebszyklus variieren. Noch eine weitere Aufgabe besteht in der Bereitstellung einer Gasfeder, die eine Kraftabgabe bereitstellt, welche sich nicht mit Temperaturänderungen ändert.

Die oben erwähnten Aufgaben werden gemäß der vorliegenden Erfindung bei einer Gasfeder durch die Merkmale von Anspruch 1 gelöst.

Eine Gasfeder gemäß der vorliegenden Erfindung liefert eine vorbestimmte Kraftabgabe durch Änderung des Volumens des Gasabschnitts. Wenn die Temperatur des Gases im Gasabschnitt zum Beispiel fällt, aber das Volumen des Gasabschnitts konstant bleibt, werden dementsprechend der Druck des Gases und die Kraftabgabe der Gasfeder verringert. Die Druckverminderung wird durch den Sensor erfaßt. Die Steuerung spricht auf die Änderung des Sensorsignals durch Aktivierung des Motorantriebs an, der den schwimmenden Kolben in einer Richtung verschiebt, um das Volumen des Gasabschnitts zu verkleinern, wodurch der Druck des Gases und die Ausgangskraft erhöht werden. Die vorliegende Erfindung ermöglicht es der Gasfeder, eine Ausgangskraft bereitzustellen, die unabhängig von Temperaturänderungen über einen sehr großen Bereich für jede gegebene Hubstellung im Wesentlichen konstant bleibt.

Über eine lange Nutzlebensdauer kann eine steuerbare Kraftabgabe bereitgestellt werden, ohne daß irgendeine Wartung erforderlich ist, wie zum Beispiel Nachfüllen eines Gases in einen zusätzlichen Versorgungsspeicher.

Weiterhin können durch die Gasfeder Kräfte ausüben werden, welche auf vorbestimmte Weise während jedes Hubs eines Betriebszyklus variieren.

Bei einem einfachen System können die Steuerung und der Antrieb regelmäßig aktiviert werden, wenn die Last geschlossen ist. Die Steuerung und der Antrieb werden von der Batterie des Fahrzeugs betrieben. Eine regelmäßige Aktivierung spart Batterieenergie ein. Es kann eine Abschaltung bei niedriger Batteriespannung eingebaut werden, um ein Entleeren der Batterie zu verhindern. Wenn der Sensor eine Änderung des Gasdrucks erfaßt, wird der Antrieb dahingehend aktiviert, das Volumen des Gasabschnitts zu ändern und den Druck auf die vorbestimmte Höhe zurückzubringen. Wenn ein Benutzer die Last öffnet, ist deshalb die Gasfeder zuvor eingestellt worden, um die gewünschte Ausgangskraft zum Ausgleich des Gewichts der Last bereitzustellen, die Last in der geöffneten Stellung zu halten und einer vorbestimmten Handhabungslast in der Schließrichtung nachzugeben.

Bei einer Ausgestaltung des Systems wird der Antrieb deaktiviert, wenn die Last aus der geschlossenen Stellung bewegt wird - zum Beispiel durch Reagieren auf einen bestehenden Lampenschalter. Nach Einleitung des Öffnens funktioniert die Gasfeder auf die gleiche Weise wie eine herkömmliche Gasfeder ohne Beteiligung des Antriebs.

Wenn die Stange einer Gasfeder ausfährt, wird das Volumen des Teils der Stange, der sich zuvor in der Gaskammer befand, Teil des durch das Gas eingenommenen Volumens. Wie wohlbekannt, reduziert dieses Phänomen natürlich die Ausgangskraft in Abhängigkeit vom Ausfahrzustand der Stange. Es kann deshalb wünschenswert sein, dass der Antrieb nur während des Öffnungshubs oder bei geöffneter Last aktiviert wird, so dass in der geöffneten Stellung der Last eine vorbestimmte Kraft erzeugt wird.
Das Öffnen der Last kann auch eine Betriebsphase des Systems einleiten, in der der schwimmende Kolben als Reaktion auf ein in der Steuerung gespeichertes Rechnerprogramm bewegt wird, das vorbestimmte Änderungen der Gasfederkraft durch Antrieb des schwimmenden Kolbens als Reaktion auf unter Steuerung des Rechnerprogramms erzeugte Signale liefert. Das Programm kann zum Beispiel ein automatisches Öffnen der Last ohne Eingriff des Benutzers, einen Leerlauf- oder Stillstandszustand, wenn die Last vollständig oder zu einem gewünschten Grad geöffnet ist, die Aufrechterhaltung einer vorbestimmten Offenhaltekraft und Reaktion auf eine vorbestimmte Handhabungslast, die ein automatisches Schließen der Last einleitet, bereitstellen. Zusätzlich zur Rechnersteuerung der Gasfeder zu Beginn eines Öffnungshubs besteht die Möglichkeit der Bereitstellung einer relativ großen Ausgangskraft zu Beginn des Öffnungshubs, wenn der mechanische Vorteil der Gasfeder bezüglich der Last aufgrund der Geometrie der Gasfeder bezüglich der Last gewöhnlich gering ist, gefolgt von einer Reduzierung der Kraft am Ende des Öffnungshubs. Das Sensorsignal liefert eine Rückkopplung zur Servosteuerung der Antriebsvorrichtung, um die Funktion der Gasfeder dem Programm anzupassen.

Die Antriebsvorrichtung zur Bewegung des schwimmenden Kolbens kann eine Ölmasse im geschlossenen Abschnitt der Kammer, eine Pumpe zum gezielten Hinzufügen von Öl zu dem geschlossenen Abschnitt, eine die Ölpumpe bedienende Ölwanne, eine Stromquelle zur Ansteuerung der Pumpe und Leitungen und ein zwischen dem geschlossenen Abschnitt der Kammer und der Pumpe und der Wanne angeordnetes steuerbares Ventil enthalten. Bei einem solchen hydraulischen Antrieb handelt es sich bei dem durch das Erfassungsmittel erfassten, den Gasdruck anzeigenden Merkmal vorzugsweise um den Druck des Öls im geschlossenen Abschnitt der Kammer. Vorteilhafterweise kann zwischen dem geschlossenen Abschnitt und der Ölzufuhr-/-rückführleitung ein Sicherheitsventil angeordnet sein, das so ausgeführt ist, dass es sich als Reaktion auf einen Ölstrom vom geschlossenen Abschnitt zur Leitung mit einer eine vorbestimmte Geschwindigkeit übertreffenden Geschwindigkeit schließt. Eine solche Anordnung verhindert ein plötzliches Schließen der Last bei einem Versagen im Hydrauliksystem.

Bei anderen Ausführungsformen enthält die Vorrichtung zur Bewegung des schwimmenden Kolbens einen Elektromotor und eine zwischen den Motor und den schwimmenden Kolben gekoppelte Kraftübertragung, wie zum Beispiel einen Kugelumlaufspindelantrieb. Bei solchen Ausführungsformen kann es sich bei dem vom Sensor erfassten Merkmal um den Druck des Gases im Gasabschnitt der Kammer handeln. Der Sensor befindet sich im schwimmenden Kolben, und das Drucksignal wird über einen im geschlossenen Abschnitt der Zylinderkammer angeordneten und sich durch die Endverschlusseinheit erstreckenden Leiter vom Zylinder abgenommen.

### BESCHREIBUNG DER ZEICHNUNGEN

Zum umfassenderen Verständnis der vorliegenden Erfindung und ihrer Vorteile kann auf die folgende Beschreibung beispielhafter Ausführungsformen in Verbindung mit den beigefügten Zeichnungen Bezug genommen werden; es zeigen darin:
Figur 1 eine schematische Seitenquerschnittsansicht einer ersten Ausführungsform einer Gasfeder und ein Schema der Antriebs- und Steuerkomponenten; und
Figur 2 eine schematische Seitenquerschnittsansicht einer zweiten Ausführungsform und ein Schema der Antriebs- und Steuerkomponenten.

### BESCHREIBUNG DER AUSFÜHRUNGSFORMEN

Eine Gasfeder gemäß der ersten Ausführungsform weist ein Zylinderglied 10 auf, dessen eines Ende - das Stangenende 12 - eine Stangenführungs-/-dichtungsanordnung 14 und dessen anderes Ende - das geschlossene Ende 16 - eine Verschlusseinheit 18 aufnimmt. Eine Kolbenstange 20 wird durch die Führungs-/Dichtungsanordnung 14 in abgedichteter Beziehung zur Gleitbewegung zwischen einer eingezogenen Stellung, in der der Großteil der Stange im Zylinderglied aufgenommen ist, und einer ausgefahrenen Stellung, in der der Großteil der Stange aus dem Zylinderglied ragt, aufgenommen. Eine Kolbenanordnung 22, die von beliebiger herkömmlicher Ausführung sein kann, wie zum Beispiel der Art mit dynamischer Dämpfung, ist im Zylinderglied am Ende der Stange befestigt. Wenn das Merkmal der dynamischen Dämpfung des Kolbens vorgesehen ist, begrenzt es Fluidstrom an der Kolbenanordnung vorbei, so dass die Bewegungen der Kolbenstange 20 bei ihrem Ausfahren und Einziehen verlangsamt werden.

Ein schwimmender Kolben 24 gleitet in abgedichteter Beziehung entlang einem Teil des Zylinderglieds 10 zwischen der Verschlusseinheit 18 und einer in der Wand des Zylinderglieds 10 ausgebildeten Haltenut 26. Der schwimmende Kolben 24 unterteilt die Kammer im Zylinderglied in einen Gasabschnitt N2, der ein unter Druck stehendes Gas (zum Beispiel Stickstoff) enthält, und einen geschlossenen Endabschnitt ÖL, der Öl enthält. Des Weiteren kann der Gasabschnitt eine Ölmenge zur Schmierung der Kolbenstange und Verbesserung der Abdichtung der Kolbenstange 20 gegenüber der Führungs-/Dichtungsanordnung 14 enthalten. Die Ölmenge im Abschnitt ÖL ändert sich und wird durch Einpumpen von Öl oder Ablassen von Öl daraus durch einen Durchgang 28 in der Verschlusseinheit 18 und eine Leitung 30 gesteuert.
Wie an sich wohlbekannt ist, weist das geschlossene Ende 16 des Zylinderglieds 10 ein Anschlussstück 32 auf, das an einem (nicht gezeigten) Fahrzeugaufbau befestigt ist, und die Kolbenstange 20 nimmt ein Anschlussstück 34 auf, das an einer Kofferraumhaube, Heckklappe oder dergleichen (die Last, die auch nicht gezeigt ist) befestigt ist. Wenn die Last freigeben wird, wirkt der Druck des Gases im Gasabschnitt N2 über die Querschnittsfläche in der Führungs-/-Dichtungsanordnung 14 auf die Kolbenstange 20 ein und legt an die Kolbenstange eine Kraft in ihrer Ausfahrrichtung ein. Die Kraft kompensiert die Kraft der Last teilweise oder vollständig und unterstützt das Heben der Last aus dem geschlossenen in den geöffneten Zustand. In der Regel ist die Gasfeder zur Bereitstellung einer Offenhaltekraft ausgeführt, die die Last in der geöffneten Stellung hält, bis der Benutzer eine Handhabungslast anlegt, um die Last in die geschlossene Stellung zurück zu bewegen. Wie oben besprochen, bewirken Temperaturänderungen des Gases im Gasabschnitt N2 große Schwankungen der Offenhaltelast.

Ein Dreiwege-Magnetventil 38 ist in der Leitung 30 angeordnet und gewährleistet (1) ein Verbinden der Leitung 30 mit einer Pumpe 40 durch eine Leitung 42 mit einem Rückschlagventil 44, (2) ein Schließen der Leitung 30, so dass sie kein Öl empfangen oder abführen kann - wodurch Öl im geschlossenen Endabschnitt ÖL eingeschlossen wird - und (3) ein Verbinden der Leitung 30 mit einer Leitung 45, die zu einer Wanne 46 führt, die die Pumpe 40 bedient. Eine Systemsteuerung 48 steuert die Pumpe 40 über einen Leiter 41 und das Magnetventil 38 als Reaktion auf Eingangssignale, die ein von einem mit der Leitung 30 verbundenen Druckschalter oder Druckwandler 52 durch einen Leiter 50 zugeführtes Signal und ein von einem Lastpositionssensor 56, bei dem es sich um einen der Last (zum Beispiel der Kofferraumhaube, der Heckklappe oder dergleichen) zugeordneten Lampenschalter oder einen eigens vorgesehenen Schalter, der bei Öffnen oder Schließen der Last periodisch schaltet, handeln kann, über einen Leiter 54 zugeführtes Signal enthalten. Zu anderen Eingaben in die Steuerung, wie durch den Kasten "EINGABEN" 58 schematisch gezeigt, gehören ein Signal, das anzeigt, ob die Fahrzeugzündung an oder aus ist, und ein Signal, das eine niedrige Batteriespannung anzeigt. Die Steuerung kann Anzeigen enthalten, wie durch den Kasten "ANZEIG." 60 schematisch gezeigt, zum Beispiel eine Lampe "niedrige Batteriespannung", eine Lampe "Steuersystemfehler" und eine Lampe "niedriger Druck", wobei die letztere anzeigt, dass der Gasfederdruck unter der gewünschten Höhe liegt, obgleich das Steuersystem ordnungsgemäß funktioniert, und dass die Gasfeder eine Wartung benötigt.

Es sind verschiedene Steuerungsarten der Gasfeder möglich. Bei einem Beispiel wird das Gas in der Gasfeder, wenn die Last geschlossen ist, jederzeit auf einem allgemein konstanten Druck gehalten, vorausgesetzt, dass die Batterie nicht erschöpft ist, wie durch die Anzeige für niedrige Batteriespannung angezeigt. Wenn die Zündung abgeschaltet ist, und solange die Batteriespannung nicht niedrig ist, empfängt die Steuerung 48 regelmäßig ein Signal vom Druckschalter 52 und steuert, wenn der Druck unter der gewünschten Höhe liegt, die Pumpe 40 an und schaltet das Ventil 38, um durch die Leitung 30 Öl in den geschlossenen Endabschnitt ÖL der Gasfeder zu pumpen. (Natürlich hängt der Druck des Öls im Ölabschnitt vom Gasdruck im Gasabschnitt N2 und der durch die Gasfeder ausgeübten Kraft ab.) Wenn der gewünschte Druck erreicht ist, erhält die Steuerung ein Signal vom Druckschalter 52, schaltet die Pumpe ab und das Ventil 38 in die geschlossene Stellung, wodurch der Öldruck im Abschnitt ÖL eingesperrt wird. Wenn der Druckschalter 52 erfasst, dass der Öldruck über der gewünschten Höhe liegt, wird das Ventil so geschaltet, dass es die Leitung 30 zur Leitung 45 und zur Wanne 46 öffnet, wodurch Öl aus dem Abschnitt ÖL abgelassen und der Druck in der Gasfeder reduziert wird. Wenn der Druck auf die gewünschte Höhe abfällt, wird das Ventil in die geschlossene Stellung geschaltet. Bei eingeschalteter Zündung kann die Funktionsweise des Systems der bei abgeschalteter Zündung entsprechen, oder die Funktionsweise kann geändert werden, indem entweder eine häufigere Überwachung oder konstante Überwachung des Drucks in der Gasfeder und somit eine häufigere oder konstante Aufrechterhaltung der gewünschten Gasfederkraft gestattet wird.

Bei geöffneter Last funktioniert die Gasfeder auf die gleiche Weise wie eine herkömmliche Gasfeder. Allgemein ist es bei den oben beschriebenen Betriebsarten nicht wünschenswert, einen Betrieb des Ölzuführungssystems zu gestatten, wenn die Last nicht geschlossen ist, da der Betrieb der Pumpe, der erfolgt, wenn sich die Stange herausbewegt, wodurch der Gasdruck an sich reduziert wird, während der durch die Stange eingenommene Teil des Volumens des Gasabschnitts reduziert wird, den Gasdruck nur so lange erhöhen wird, wie die Last geöffnet ist. Wenn die Last geschlossen wird, lässt das System einfach Öl wieder in die Wanne ab. Deshalb deaktiviert ein Signal vom Heckklappenpositionssensor 56, das anzeigt, dass die Last geöffnet ist, das System, das bei geöffneter Last jederzeit abgeschaltet bleibt.

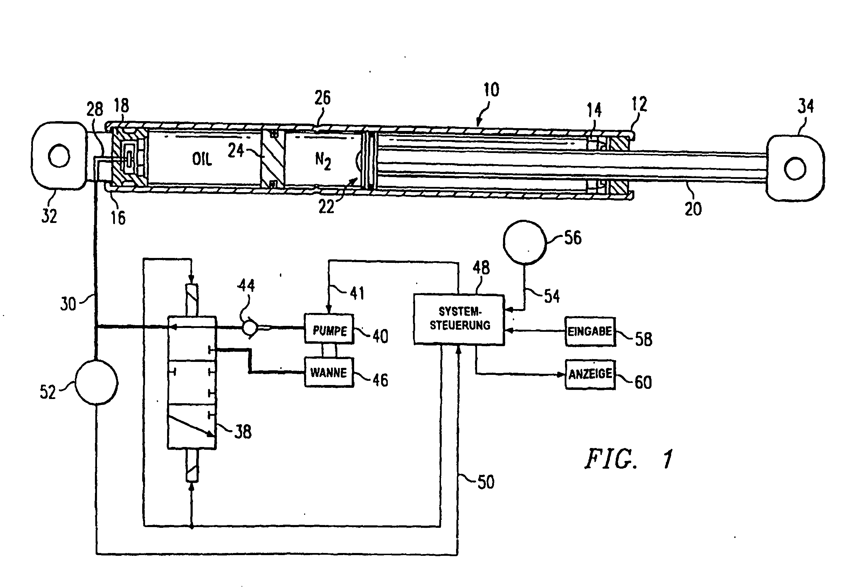

Zur Bereitstellung einer anderen Betriebsweise der Ausführungsform von Figur 1 enthält die Steuerung 48 einen Rechner, der so programmiert ist, dass er die Pumpe und das Ventil so steuert, dass die Federkraft beginnend, wenn die Last geöffnet wird, und endend, wenn die Last geschlossen wird, geändert wird. Bei dieser Betriebsweise wird anstelle eines Druckschalters auch ein Druckwandler 52 verwendet, der der Steuerung Signale zuführt, die die Ausgangskraft der Gasfeder anzeigen. Wenn die Last geschlossen ist, funktioniert das System auf die oben beschriebene Weise und hält somit die Gasfederkraft auf einem eingestellten Wert in Bereitschaft für einen Öffnungs-/Schließzyklus. Bei vielen Installationen ist die zum Bewegen der Last zu Beginn eines Öffnungshubs der Last aus der vollständig geschlossenen Position erforderliche Kraft im Vergleich zur Offenhaltekraft relativ groß, was auf eine geringe Hebelübersetzung einer Funktion des Winkels zwischen der Achse der Gasfeder und einer die Schwenkachse der Last und die Stelle, an der die Gasfeder mit der Last verbunden ist, verbindenden Linie zurückzuführen ist. Wenn ein automatisches Öffnen bereitgestellt werden soll, wird die Steuerung so programmiert, dass sie die Gasfeder bei geschlossener Last auf einer relativ großen Kraft hält. Wenn die Last entriegelt und zur geöffneten Stellung bewegt wird, bewegt die große Kraft der Gasfeder die Last ohne Eingriff des Benutzers in die geöffnete Stellung. Dann kann das Programm die Pumpe 40 inaktiv und das Ventil 38 geschlossen halten, bis der Druckwandler der Steuerung anzeigt, dass die Last vollständig geöffnet ist - das heißt, der Druckwandler zeigt an, dass die Federkraft eine bestimmte Höhe erreicht hat. Der vollständig geöffnete Zustand kann auch durch einen Positionsschalter oder einen Neigungsdetektor gemeldet werden.

Wenn das System die geöffnete Position erfasst, reagiert die Steuerung durch Schalten des Ventils, um die Leitung 30 zur Wanne 46 zu öffnen, woraufhin die Offenhaltelast, falls erforderlich oder gewünscht, auf eine vorbestimmte Höhe reduziert wird. Zu diesem Zeitpunkt, der vom Druckwandler 52 durch Rückkopplung gemeldet wird, wird das Ventil 38 in die geschlossene Stellung geschaltet und legt so die Offenhaltekraft fest. Wenn der Benutzer eine Handhabungskraft an die Last anlegt, wird der erhöhte Druck durch den Druckwandler erfasst, der der Steuerung signalisiert, das Ventil 38 zur Wanne zu öffnen. Die reduzierte Federkraft gestattet der Last, sich durch Schwerkraft in die geschlossene Stellung zu bewegen. Ein Einrasten kann durch Trägheitskraft erfolgen oder durch ein automatisches Rastverriegelungsglied durchgeführt werden.

Ein vollautomatisches Öffnen und Schließen, vorzugsweise unter der Steuerung eines Armaturenbrettschalters oder einer Hand-Fernsteuerungsvorrichtung (nicht gezeigt) kann in die Steuerung 48 eingegliedert werden. Der Benutzer befiehlt einen Öffnungshub, der ein Rastverriegelungsglied freigibt, damit sich die Last öffnen kann. Falls erforderlich kann, wenn die Last zum Beispiel bezüglich der Achse der Gasfeder am Übertotpunkt liegt, ein Öffnungsmechanismus zum Bewegen der Last in eine Stellung, in der die Gasfeder übernimmt, eingebaut sein. Das Ölsteuersystem kann so lange außer Betrieb bleiben, bis der Benutzer einen Schließhub befiehlt und somit das Ventil 38 zum Öffnen der Ölleitung 30 zur Wanne 46 geschaltet wird.

Wenn die Ölversorgung und das Steuersystem entweder zum halbautomatischen oder zum vollautomatischen Öffnen und Schließen eingestellt sind, wird durch Erreichen der geschlossenen Stellung eine Betriebsphase eingeleitet, in der die Gasfederkraft wieder auf die programmierte Höhe für den nächsten Zyklus zurückgeführt wird, indem Öl in den geschlossenen Abschnitt ÖL zurückgepumpt wird, um die Gasfeder für den nächsten Zyklus bereit zu machen und sie in diesem Zustand zu halten. Wenn ein Benutzer die Last öffnen möchte, bevor das System wieder in den "Bereitschafts"-Zustand zurückgeführt worden ist, kann die Last manuell geöffnet werden, obgleich der Benutzer eine Hebekraft anlegen muss, um die reduzierte Kraft der Gasfeder zu ergänzen. Die Gasfeder behält jedoch ihre Restkraft, um das manuelle Öffnen der Last zu unterstützen.

Um bei einem Versagen des Ölversorgungssystems, das zu einem plötzlichen Öldruckverlust führt, ein unbeabsichtigtes plötzliches Schließen der Last zu vermeiden, kann die Verschlusseinheit 18 ein Sicherheits-Absperrventil enthalten, das auf einen hohe Öldurchflussrate vom Ölabschnitt zur Leitung 30 durch Schließen und Geschlossenbleiben, bis die Last von der Gasfeder entfernt ist, zum Beispiel durch leichtes Anheben der Last, wodurch die Druckdifferenz am Sicherheits-Absperrventil beseitigt wird, reagiert. Auf diese Weise kann die Last dann in einer Reihe von kontrollierten Schritten sicher abgesenkt werden.

Ein Rechnerprogramm kann so konzipiert werden, dass es dem Benutzer gestattet, die Stellung der Last niedriger als die vollständig geöffnete Stellung einzustellen. Bei einer "eingestellten Öffnungsstellung" des Programms, die durch eine Eingabe in den Rechner der Steuerung 48 initiiert wird, kann der Benutzer die Last durch Auf- und Abbewegen der Last in die gewünschte Stellung "rucken". Wenn die Last kurzzeitig eine gewünschte Stellung in einem Zustand "ohne Benutzereingriff" hält, gibt der Benutzer ein Befehl "eingestellte Stellung" ein, der das System dazu veranlasst, nach Einleitung eines Öffnungshubs nach einer durch das Drucksignal vom Wandler 52 angezeigten Kraftabgabe zu suchen und die Kraft durch Schalten des Ventils 38 in die geschlossene Stellung festzulegen und die Kraft festzulegen, wenn der Wandler meldet, dass die die Last in der eingestellten Stellung haltende Kraft aufgebaut worden ist.

Eine ähnliche vom Benutzer eingestellte Öffnungsstellung kann implementiert werden, indem ein Neigungsdetektor in die Last eingebaut und für den Benutzer ein Weg bereitgestellt wird, einen gewünschten Öffnungsgrad in den Rechner einzugeben. Die Eingabe legt einen Neigungswert fest, bei dem die Kraft zum Halten der Last in der gewünschten Stellung in der Gasfeder festgelegt wird, wenn der Neigungsdetektor eine Rückkopplung an die Steuerung liefert, die anzeigt, dass die Stellung erreicht worden ist. Das Programm wird so konzipiert, dass es die Zufuhr- oder Ablassrate des Öls zu oder aus dem Ölabschnitt ÖL der Gasfeder als Funktion der Neigungsänderungsrate ändert. Dazu weist das Ölversorgungssystem ein Vierstellungsventil auf, das eine steuerbare Stellung besitzt, in der das Öl gleichzeitig in gesteuerten Anteilen sowohl zum Abschnitt ÖL der Gasfeder als auch zur Wanne 46 gepumpt wird. Die Fähigkeit des Systems, die Last zu einer gewünschten Öffnungsstellung, die niedriger als die vollständig geöffnete Stellung ist, zu öffnen, ist bei großen Heckklappen, die in der vollständig geöffneten Stellung gegen Überkopf-Garagentore oder niedrige Decken oder Träger, die oftmals in Parkhäusern vorhanden sind, schlagen können, ein großer Vorteil.

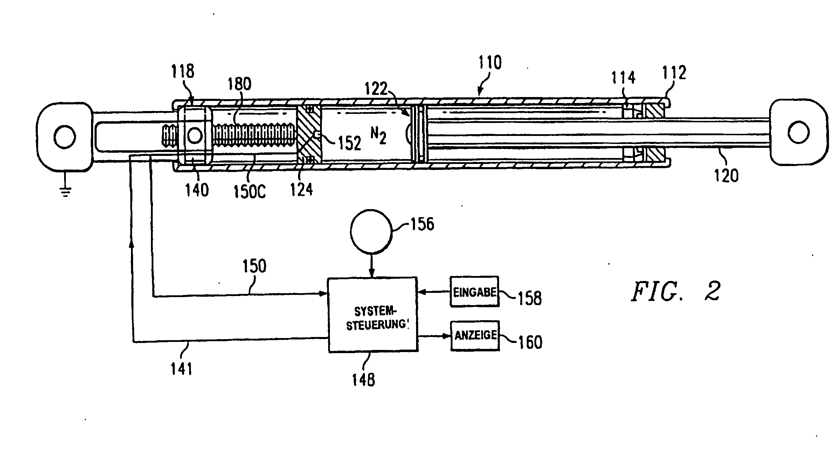

Die Ausführungsform nach Figur 2 ähnelt in vielerlei Hinsicht der nach Figur 1. In Figur 2 werden die gleichen Bezugszahlen, die auf Figur 1 angewandt werden, plus 100 verwendet, um entsprechende Teile zu bezeichnen. Die obige Beschreibung der Ausführungsform nach Figur 1 gilt auch für die Ausführungsform nach Figur 2, außer hinsichtlich Folgendem:

Der Hauptunterschied zwischen der Ausführungsform nach Figur 1 und der Ausführungsform nach Figur 2 besteht darin, dass bei der Ausführungsform nach Figur 2 der hydraulische Antrieb zum Bewegen des schwimmenden Kolbens durch einen Elektromotor 140 ersetzt wird, der in die Verschlusseinheit 18 eingebaut (wie gezeigt) oder außerhalb der Verschlusseinheit am Zylinder 110 befestigt sein kann. Der Motor 140 treibt einen Kugelumlaufspindelantrieb an, von dem nur die Leitspindel 180 in der Zeichnung gezeigt ist, der an den schwimmenden Kolben 124 angekoppelt ist und ihn antreibt. Der Druckschalter oder Wandler 152 ist in den schwimmenden Kolben 124 eingebaut, und der Leiter 150 führt vom Wandler 152 über ein schraubenförmiges Teil 150c (Spirale nicht gezeigt) im geschlossenen Abschnitt 182 zwischen dem Kolben 125 und der Verschlusseinheit 118 zur Systemsteuerung 148. Im Antrieb ist wahrscheinlich ein Reduktionsgetriebe eingebaut.

Die Systemsteuerung 148 ist zur Ansteuerung des Motors durch ein Leiterkabel 141 aufgebaut, um die Leitspindel 180 anzutreiben und den Kolben 124 auf das Stangenende 12 zu oder davon weg zu bewegen und somit das Volumen des Gasabschnitts N2 des Zylinderglieds 110 zu verkleinern oder zu vergrößern. Alle Betriebsweisen der Steuerung 148 und des Motors 140, die oben bezüglich der Steuerung 48, der Pumpe 40 und des Ventils 38 beschrieben worden sind, sind auch bei der Ausführungsform nach Figur 2 möglich. Deshalb wird auf eine unnötige Wiederholung der vorhergehenden Beschreibung hier verzichtet.

## Patentansprüche

1. Gasfeder zur Bewegung einer Last bezüglich eines Körpers, die Folgendes umfaßt:
ein Zylinderglied (10, 110) mit einer Achse, einer eine Kammer bildenden Innenfläche, einem ersten Ende des Zylindergliedes (10, 110) 120) und einem zweiten, geschlossenen Ende (16);
eine im ersten Ende des Zylinderglieds (10, 110) aufgenommene Kolbenstangendichtung/-führung (14, 114);
eine in der Dichtung/Führung (14, 114) zur Bewegung in das und aus dem Zylinderglied (10, 110) aufgenommene Kolbenstange (20, 120) mit einer am Ende der Kolbenstange (20, 120) befestigten Kolbenanordnung (22, 122);
einen schwimmenden Kolben (24,124), um einen Gasabschnitt (N2) und einen geschlossenen Endabschnitt (182) zu definieren;
eine im Gasabschnitt (N2) enthaltene Gasmasse, die unter einem über Atmosphärendruck liegenden Druck steht;
eine Erfassungsvorrichtung (52, 152) zum Erfassen der durch das Gas im Gasabschnitt (N2) an die Kolbenstange (20, 120) angelegten Kraft und zum Erzeugen eines entsprechenden Signals,
ein Mittel zur Bewegung des schwimmenden Kolbens (24, 124) in Axialrichtung des Zylinderglieds (10, 110), um den Druck des Gases im Gasabschnitt (N2) zu ändern, wobei das Bewegungsmittel von einer Steuerung (48, 148) in Abhängigkeit von dem Signal gesteuert wird;
**dadurch gekennzeichnet, daß** der schwimmende Kolben (24, 124) im Zylinderglied (10, 110) zur Bewegung entlang der Achse und in abgedichtetem Eingriff mit der Innenfläche aufgenommen ist, um in der Kammer zwischen dem schwimmenden Kolben (24, 124) und dem ersten Ende des Zylindergliedes (10, 110) einen Gasabschnitt (N2) und zwischen dem schwimmenden Kolben (24, 124) und dem geschlossenen Ende (16) einen geschlossenen Endabschnitt (182) zu definieren.

2. Gasfeder nach Anspruch 1, **dadurch gekennzeichnet, daß** das Mittel zur Bewegung des schwimmenden Kolbens (24, 124) eine Ölmasse im geschlossenen Abschnitt der Kammer und ein Mittel zum gezielten Hinzufügen von Öl zu dem geschlossenen Abschnitt und Entfernen von Öl daraus enthält.

3. Gasfeder nach Anspruch 2, **dadurch gekennzeichnet, daß** die durch die Erfassungsvorrichtung (52, 152) erfaßte Kraft der Druck des Öls im geschlossenen Abschnitt der Kammer ist.

4. Gasfeder nach Anspruch 1, **dadurch gekennzeichnet, daß** das Mittel zur Bewegung des schwimmenden Kolbens (24, 124) eine Ölmasse im geschlossenen Abschnitt der Kammer, eine Ölpumpe (40) und eine die Ölpumpe (40) bedienende Ölwanne (46) enthält und die Steuerung (48) den Betrieb der Ölpumpe (40) und ein zwischen dem geschlossenen Abschnitt der Kammer und der Ölpumpe (40) und der Wanne (46) angeordnetes steuerbares Ventil (38) steuert.

5. Gasfeder nach Anspruch 2, **dadurch gekennzeichnet, daß** eine Ölzufuhr-/-rückführleitung (30) mit dem geschlossenen Abschnitt verbunden ist und weiterhin ein Sicherheitsventil vorhanden ist, das zwischen dem geschlossenen Abschnitt und der Ölzufuhr-/-rückführleitung (30) angeordnet und so ausgeführt ist, daß es sich als Reaktion auf einen Ölstrom vom geschlossenen Abschnitt zur Leitung (30) mit einer eine vorbestimmte Geschwindigkeit übertreffenden Geschwindigkeit schließt.

6. Gasfeder nach Anspruch 1, **dadurch gekennzeichnet, daß** das Mittel zur Bewegung des schwimmenden Kolbens (124) einen Motor (140) und eine zwischen den Motor (140) und den schwimmenden Kolben (124) gekoppelte Kraftübertragung enthält.

7. Gasfeder nach Anspruch 6, **dadurch gekennzeichnet, daß** die durch die Erfassungsvorrichtung (52, 152) erfaßte Kraft der Gasdruck im Gasabschnitt (N2) der Kammer ist.

8. Gasfeder nach Anspruch 1, **dadurch gekennzeichnet, daß** das Mittel zur Bewegung des schwimmenden Kolbens (124) einen Motor (140) und einen Kugelumlaufspindelantrieb enthält, der vom Motor (140) angetrieben wird und eine mit dem schwimmenden Kolben (124) verbundene Leitspindel (180) aufweist.

9. Gasfeder nach Anspruch 8, **dadurch gekennzeichnet, daß** die durch die Erfassungsvorrichtung (52, 152) erfaßte Kraft der Gasdruck im Gasabschnitt (N2) der Kammer ist.

10. Gasfeder nach Anspruch 1, **dadurch gekennzeichnet, daß** die Steuerung (48, 148) das Bewegungsmittel so steuert, daß die durch die Kolbenstange (120) ausgeübte Kraft auf einen im Wesentlichen konstanten Wert gehalten wird, wenn sich die Last in einer geschlossenen Stellung bezüglich des Körpers befindet.

11. Gasfeder nach Anspruch 1, **dadurch gekennzeichnet, daß** die Steuerung (48, 148) das Bewegungsmittel nur dann steuert, wenn sich die Last in der geschlossenen Stellung befindet, und deaktiviert wird, wenn die Gasfeder die Last aus der geschlossenen Stellung bewegt.

12. Gasfeder nach Anspruch 1, **dadurch gekennzeichnet, daß** die Steuerung (48, 148) das Bewegungsmittel so steuert, daß eine im Wesentlichen konstante Gasdruckkraft an der Kolbenstange (20, 120) aufrechterhalten wird, wenn sich die Last in einer geschlossenen Stellung bezüglich des Körpers befindet, und daß die durch die Kolbenstange (20, 120) ausgeübte Kraft automatisch geändert wird, so daß sie einem programmierten Kraftprofil entspricht, das initiiert wird, wenn die Last aus der geschlossenen Stellung bewegt wird.

13. Gasfeder nach Anspruch 1, **dadurch gekennzeichnet, daß** die Steuerung (48, 148) durch einen Benutzer so eingestellt werden kann, daß die Last durch das Bewegungsmittel in eine teilweise geöffnete Stellung bewegt und dort gehalten wird.

## Claims

1. Gas spring for moving a load relative to a body, comprising
a cylinder member (10, 110) having an axis, an inner surface forming a chamber, a first end of the cylinder member (10, 110) and a second, closed end (16),
a piston rod seal/guide (14, 114) accommodated in the first end of the cylinder member (10, 110);
a piston rod (20, 120) accommodated in the seal/guide (14, 114) for movement into and out of the cylinder member (10, 110), with a piston arrangement (22, 122) fastened to the end of the piston rod (20, 120);
a floating piston (24, 124), in order to define a gas section (N2) and a closed end section (182);
a mass of gas under a pressure above atmospheric pressure contained in the gas section (N2);
a sensing means (52, 152) for sensing the force applied to the piston rod (20, 120) by the gas in the gas section (N2) and for producing a corresponding signal;
a means for moving the floating piston (24, 124) axially of the cylinder member (10, 110) to vary the pressure of the gas in the gas section (N2)
the moving means being controlled by a control (48, 148) in response to the signal;
**characterized in that** the floating piston (24, 124) is received in the cylinder member (10, 110) for movement along the axis and in sealed engagement with the inner surface to define in the chamber a gas section (N2) between the floating piston (24, 124) and the first end of the cylinder member (10, 110) and a closed end section (182) between the floating piston (24, 124) and the closed end (16).

2. Gas spring according to Claim 1, **characterized in that** the means for moving the floating piston (24, 124) includes a mass of oil in the closed section of the chamber, and a means for selectively adding oil to and removing oil from the closed section.

3. Gas spring according to Claim 2, **characterized in that** the force sensed by the sensing means (52, 152) is the pressure of the oil in the closed section of the chamber.

4. Gas spring according to Claim 1, **characterized in that** the means for moving the floating piston (24, 124) includes a mass of oil in the closed section of the chamber, an oil pump (40), and an oil sump (46) serving the oil pump (40), and the controlling means (48) controls the operation of the oil pump (40) and a controllable valve (38) interposed between the closed section of the chamber and the oil pump (40) and the sump (46).

5. Gas spring according to Claim 2, **characterized in that** there is an oil delivery/return conduit (30) connected to the closed section and further there is present an emergency valve interposed between the closed section and the oil delivery/return conduit (30) and adapted to close in response to a flow of oil from the closed section to the conduit (30) at a rate exceeding a predetermined rate.

6. Gas spring according to Claim 1, **characterized in that** the means for moving the floating piston (124) includes a motor (140) and a transmission coupled between the motor (140) and the floating piston (124).

7. Gas spring according to Claim 6, **characterized in that** the force sensed by the sensing means (52, 152) is the pressure of the gas in the gas section (N2) of the chamber.

8. Gas spring according to Claim 1, **characterized in that** the means for moving the floating piston (124) includes a motor (140) and a recirculating ball/screw drive driven by the motor (140) and having a lead screw (180) connected to the floating piston (124).

9. Gas spring according to Claim 8, **characterized in that** the force sensed by the sensing means (52, 152) is the pressure of the gas in the gas section (N2) of the chamber.

10. Gas spring according to Claim 1, **characterized in that** the controlling means (48, 148) controls the moving means so as to maintain the force exerted by the piston rod (120) at a substantially constant value when the load is in a closed position relative to the body.

11. Gas spring according to Claim 1, **characterized in that** the controlling means (48, 148) controls the moving means only when the load is in the closed position and is deactivated when the gas spring moves the load from the closed position.

12. Gas spring according to Claim 1, **characterized in that** the controlling means (48, 148) controls the moving means so as to maintain a substantially constant gas pressure force on the piston rod (20, 120) when the load is in a closed position relative to the body and to automatically vary the force exerted by the piston rod (20, 120) to correspond to a programmed force profile initiated when the load is moved from the closed position.

13. Gas spring according to Claim 1, **characterized in that** the controlling means (48, 148) is settable by a user such that the load is moved to and held at a partially open position by the moving means.

## Revendications

1. Vérin pneumatique destiné à déplacer une charge par rapport à un corps, qui comprend:
un organe de cylindre (10, 110) qui présente un axe, une surface intérieure qui forme une chambre, une première extrémité de l'organe de cylindre (10, 110) et une deuxième extrémité fermée (16),
un joint d'étanchéité/guide de tige de piston (14, 114) agencé dans la première extrémité de l'organe de cylindre (10, 110),
une tige de piston (20, 120) agencée dans le joint d'étanchéité/guide de tige de piston (14, 114), destinée à entrer dans l'organe de cylindre (10, 110) et à en sortir et munie d'un agencement de piston (22, 122) fixé sur l'extrémité de la tige de piston (20, 120),
un cylindre flottant (24, 124) qui définit un tronçon gazeux (N2) et un tronçon d'extrémité (182) fermé,
une masse gazeuse qui est contenue dans le tronçon gazeux (N2) et dont la pression est supérieure à la pression atmosphérique,
un dispositif de détection (52, 152) qui détecte la force exercée sur la tige de piston (20, 120) par le gaz du tronçon gazeux (N2) et qui génère un signal approprié,
un moyen de déplacement du piston flottant (24, 124) dans la direction axiale de l'organe de cylindre (10, 110), qui modifie la pression du gaz dans le tronçon gazeux (N2), le moyen de déplacement étant commandé par une commande (48, 148) en fonction du signal,
**caractérisé en ce que** le piston flottant (24, 124) est reçu dans l'organe de cylindre (10, 110) de manière à être déplacé le long de l'axe et de manière étanche par rapport à la surface intérieure pour définir un tronçon gazeux (N2) dans la chambre entre le piston flottant (24, 124) et la première extrémité de l'organe de cylindre (10, 110) et un tronçon d'extrémité (182) fermé entre le piston flottant (24, 124) et l'extrémité fermée (16).

2. Vérin pneumatique selon la revendication 1, **caractérisé en ce que** le moyen de déplacement du piston flottant (24, 124) contient une masse d'huile dans le tronçon fermé de la chambre et un moyen pour introduire et évacuer de l'huile de manière contrôlée dans ou hors du tronçon fermé.

3. Vérin pneumatique selon la revendication 2, **caractérisé en ce que** la force détectée par le dispositif de détection (52, 152) est la pression de l'huile dans le tronçon fermé.

4. Vérin pneumatique selon la revendication 1, **caractérisé en ce que** le moyen de déplacement du piston flottant (24, 124) contient une masse d'huile dans le tronçon fermé de la chambre, une pompe à huile (40) et une cuve à huile (46) qui dessert la pompe à huile (40) et la commande (48) commande l'actionnement de la pompe à huile (40) et une soupape (38) pouvant être commandée agencée entre le tronçon fermé de la chambre et la pompe à huile (40) et la cuve (46).

5. Vérin pneumatique selon la revendication 2, **caractérisé en ce qu'**un conduit (30) d'apport/de retour d'huile est relié au tronçon fermé et une soupape de sécurité est agencée en outre entre le tronçon fermé et le conduit (30) d'apport/de retour d'huile et configurée de manière à réagir à un écoulement d'huile du tronçon fermé vers le conduit (30) en se fermant à une vitesse plus rapide qu'une vitesse prédéterminée.

6. Vérin pneumatique selon la revendication 1, **caractérisé en ce que** moyen de déplacement du piston flottant (124) contient un moteur (140) et une transmission de force accouplée entre le moteur (140) et le piston flottant (124).

7. Vérin pneumatique selon la revendication 6, **caractérisé en ce que** la force détectée par le dispositif de détection (52, 152) est la pression de gaz dans le tronçon gazeux (N2) de la chambre.

8. Vérin pneumatique selon la revendication 1, **caractérisé en ce que** le moyen de déplacement du piston flottant (124) contient un moteur (140) et un entraînement à vis et bille qui est entraîné par le moteur (140) et qui présente une vis mère (180) reliée au piston flottant (124).

9. Vérin pneumatique selon la revendication 8, **caractérisé en ce que** la force détectée par le dispositif de détection (52, 152) est la pression du gaz dans le tronçon gazeux (N2) de la chambre.

10. Vérin pneumatique selon la revendication 1, **caractérisé en ce que** la commande (48, 148) commande le moyen de déplacement de manière telle que la force exercée par la tige (120) de piston soit maintenue à une valeur essentiellement constante lorsque la charge est en position fermée par rapport au corps.

11. Vérin pneumatique selon la revendication 1, **caractérisé en ce que** la commande (48, 148) ne commande le moyen de déplacement que lorsque la charge est en position fermée et est désactivée lorsque le vérin pneumatique déplace la charge hors de la position fermée.

12. Vérin pneumatique selon la revendication 1, **caractérisé en ce que** la commande (48, 148) commande le moyen de déplacement de manière à maintenir une force de pression de gaz essentiellement constante sur la tige de piston (20, 120) lorsque la charge se trouve en position fermée par rapport au corps et **en ce que** la force exercée par la tige de piston (20, 120) est modifiée automatiquement de manière à correspondre à un profil de force programmé qui est suivi lorsque la charge est déplacée hors de la position fermée.

13. Vérin pneumatique selon la revendication 1, **caractérisé en ce qu'**un utilisateur peut régler la commande (48, 148) de manière à déplacer la charge à l'aide du moyen de déplacement en une position partiellement ouverte et à l'y maintenir.
